# EUROPÄISCHE PATENTSCHRIFT

(11) **EP 1 291 211 B1**
(45) Veröffentlichungstag und Bekanntmachung des Hinweises auf die Patenterteilung: **05.01.2005**
(21) Anmeldenummer: 02019876.8
(22) Anmeldetag: 10.09.2002
(51) Int. Cl.: B60J 5/04

(54) **Türmodul für eine modular aufgebaute Fahrzeugtür**
Door module for a modular vehicle door
Module pour une portière modulaire de véhicule

(30) Priorität: 10.09.2001 DE 10144330
(43) Veröffentlichungstag der Anmeldung: 12.03.2003
(73) Patentinhaber: Johnson Controls GmbH, 51399 Burscheid (DE); Kiekert Aktiengesellschaft, 42579 Heiligenhaus (DE)
(72) Erfinder: Bäumchen, Carsten, Dipl.-Ing., 66649 Oberthal (DE); Serbetci, Selcuk, Dipl.-Ing., 40883 Ratingen (DE); Zimmermann, Gerhard, Dipl.-Ing., 42553 Velbert (DE); Kasper, Andreas, Dipl.-Ing., 45138 Essen (DE); Kill, Jürgen, Dipl.-Ing., 50670 Köln (DE); Menke, Johannes-Theodor, Dipl.-Ing., 42551 Velbert (DE); Schidan, Alexander, 42719 Solingen (DE); Diek, Hans-Jörg, 52156 Monschau (DE); Mieglitz, Hans-Helmut, 40789 Monheim (DE)
(74) Vertreter: Kutzenberger, Helga, Dr.

(56) Entgegenhaltungen:
- WO-A-96/28314
- US-A- 5 902 004
- US-A- 5 904 002
- US-A- 5 924 872

## Beschreibung

Die vorliegende Erfindung betrifft ein Türmodul für eine Fahrzeugtür, bestehend aus Trägermitteln mit vormontiert gehalterten, mechanischen und/oder elektrischen Funktionskomponenten der Fahrzeugtür, wobei die Trägermittel mit einer Rohbautür derart abgedichtet verbindbar sind, dass ein äußerer Tür-Naßraum von einem inneren Trockenraum getrennt wird. Ein Türmodul dieser Art ist in US 5 902 004 offenbart.

Weiterhin betrifft die Erfindung auch eine mit einem derartigen Türmodul ausgestattete Fahrzeugtür sowie ein Verfahren zur Montage einer Fahrzeugtür.

Die EP 0 812 272 B1 (WO 9628314 A) beschreibt eine modular aufgebaute Fahrzeugtür. Dabei ist als Trägermittel eine als Präge-/Stanzteil - und somit offensichtlich aus Metallblech - ausgebildete Trägerplatte vorgesehen. An dieser Trägerplatte werden bestimmte Funktionskomponenten der Fahrzeugtür vormontiert befestigt. Dabei handelt es sich beispielsweise um eine elektrische Antriebs- und Steuereinrichtung, einen Lautsprecher einer Audioanlage, einen Seitenairbag und eine Türinnenbetätigung. Zusätzlich sollen ein oberer und ein unterer Verkleidungskörper einer Tür-Innenverkleidung vormontiert an der Trägerplatte befestigt werden, wobei auch die Verkleidungskörper zusätzliche Komponenten tragen. Die Verkleidungskörper weisen randliche Befestigungsflansche auf, die zur Auflage auf einem umlaufenden Befestigungsflansch der Trägerplatte gelangen. Die gemeinsame Befestigung an der Rohbautür erfolgt mittels die Befestigungsflansche durchgreifender Befestigungselemente (Schrauben). Zur Abdeckung der Verbindungsstellen sind zusätzliche Abdeckleisten bzw. ein zusätzlicher Abdeckrahmen erforderlich. Diese bekannte Fahrzeugtür ist mit ihren zahlreichen Einzelteilen recht kompliziert montierbar. So müssen vor der eigentlichen Montage der Trägerplatte alle notwendigerweise im Naßraum der Tür angeordneten Komponenten separat manuell mit den korrespondierenden Komponenten der Trägerplatte verbunden werden. Beispielsweise befindet sich ein Türschloß auf der Naßraumseite. Sein Sicherungsgestänge muß mit einem Sicherungsknopf während der Montage durch ein Loch der Trägerplatte geführt und mit einem tüllenartigen Dichtungselement abgeschlossen werden. Die Versorgung des Schlosses mit elektrischer Energie erfolgt über einen Stecker, der mit einem Kabelbaum verbunden und durch ein Loch geführt wird. Nachdem auch eine Schloß-Innenbetätigung auf der Trägerplatte montiert, ein Bowdenzug oder Gestänge mit dem Schloß verbunden und das dabei durchquerte Loch mit einem Dichtungselement verschlossen wurde, müssen erst die Verkleidungskörper der Innenverkleidung auf der Trägerplatte befestigt werden. Ähnliches gilt auch für weitere Komponenten. Erst nach vollständigem Abschluß der Herstellung aller notwendigen Verbindungen kann die Trägerplatte gemeinsam mit den Verkleidungskörpern der Innenverkleidung an der Rohbautür befestigt werden. Abschließend werden dann noch die Abdeckungen der Befestigungsflansche montiert.

Die Druckschrift US 5 902 004 A offenbart die Montage des Türschlosses in einem Trockenraum, um eine kostengünstige Trockenraumausführung verwenden zu können. Das Türschloss ist auf einer Trägerplatte vormontiert. In der Rohbautür ist im Türinnenblech eine Prägung vorgesehen, die das Schloss möglichst formschlüssig aufnimmt. Das Kopplungselement ist eine Öffnung, die im Bereich der Prägung der Rohbautür angeordnet ist, um den Durchgriff zwischen dem Türaußengriff und dem Türschloss zu ermöglichen. Das Schloss wird mittels Schrauben befestigt

Die Druckschrift US 5 904 002 A offenbart eine Kraftfahrzeugtür, die einen geformten Türaufbau umfasst, der mit der Rohbautür verbunden wird. Der Türaufbau umfasst nach der Vormontage die mechanischen Funktionskomponenten der Tür. Die Druckschrift offenbart elektrische Funktionskomponenten, nämlich Kabel, die bei der Montage mittels Verbindungsmitteln, nämlich Stecker bzw. Buchsen, zu einer Steckverbindung verbunden werden.

Der vorliegenden Erfindung liegt die Aufgabe zugrunde, ein Türmodul der genannten Art so zu verbessern, dass mit einer reduzierten Anzahl von Einzelteilen und mit geringerem Gewicht eine Vereinfachung der Montage erreicht wird.

Erfindungsgemäß wird dies dadurch erreicht, dass zur mechanischen Verbindung mindestens einer der an den Trägermitteln gehalterten Funktionskomponenten mit mindestens einer im Tür-Naßraum angeordneten, mechanischen Türkomponente Verbindungsmittel derart ausgebildet und zumindest teilweise am Türmodul angeordnet sind, dass eine Montage der Trägermittel in einer - insbesondere etwa einer horizontalen Fahrzeug-Querachse (Y-Achse) eines üblichen Fahrzeug-Koordinatensystems (X, Y, Z) entsprechenden - Montagerichtung unter selbstfindendem Fügen der Verbindungsmittel durchführbar ist. Durch diese vorteilhafte Ausgestaltung können die mit den Funktionskomponenten fertig vormontierten Trägermittel in einem sehr einfachen Arbeitsgang in einer bestimmten Montagerichtung gegen die Rohbautür bewegt (insbesondere geradlinig entsprechend der Fahrzeug-Querachse, gegebenenfalls aber auch durch eine Schwenkbewegung) und dann befestigt werden. Durch diese Montagebewegung erfolgt ein selbsttätiges Zusammenfügen der erfindungsgemäßen Verbindungsmittel. Es erübrigt sich somit eine manuelle Herstellung von einzelnen Verbindungen vor der eigentlichen Montage der Trägermittel. Statt dessen handelt es sich erfindungsgemäß praktisch um eine Art von Steckverbindung der fertig vormontierten Trägermittel mit der Rohbautür mit den dort angeordneten Komponenten.

In einer vorteilhaften Ausgestaltung der Erfindung sind die Trägermittel mit Innenverkleidungsmitteln zu einem einheitlichen, im Wesentlichen aus Kunststoff bestehenden Modulträger zusammengefaßt. Durch diese vorteilhafte Maßnahme kann auf eine metallische und daher schwergewichtige Trägerplatte gänzlich verzichtet werden, indem praktisch die Kunststoff-Innenverkleidungsmittel so ausgeführt sind, dass sie auch mechanische Tragfunktionen übernehmen und so als Modulträger fungieren können. Dadurch wird eine deutliche Gewichtsreduzierung erreicht. Umgekehrt hat somit der tragende Kunststoff-Modulträger auch eine Innenverkleidungsfunktion.

Zu der gesamten erfindungsgemäßen Fahrzeugtür wird auf den Anspruch 17 und zu dem erfindungsgemäßen Montageverfahren auf den Anspruch 19 verwiesen.

Weitere vorteilhafte Ausgestaltungsmerkmale der Erfindung sind in den abhängigen Ansprüchen und der folgenden Beschreibung enthalten.
Anhand von einigen in der Zeichnung veranschaulichten, bevorzugten Ausführungsbeispielen und Ausgestaltungsvarianten soll die Erfindung genauer erläutert werden. Dabei zeigen:
- Fig. 1: eine perspektivische Explosionsansicht einer Fahrzeugtür,
- Fig. 2: eine Perspektivansicht auf den Bereich eines Türschlosses in einer ersten Ausführung während der Montage,
- Fig.3: eine Ausführungsvariante zu Fig. 2,
- Fig. 4: eine schematische, teilgeschnittene Ansicht in Pfeilrichtung IV gemäß Fig. 3 im montierten Zustand,
- Fig. 5: eine Ansicht in Pfeilrichtung V gemäß Fig. 4,
- Fig. 6: eine Ansicht ähnlich Fig. 4 ohne Darstellung eines Türschlosses,
- Fig. 7: eine vergrößerte Ansicht in Pfeilrichtung VII gemäß Fig. 6,
- Fig. 8: eine schematische Schnittansicht durch den Bereich einer elektrischen Schnittstelle,
- Fig. 9: eine Ausführungsvariante zu Fig. 4,
- Fig. 10: eine teilgeschnittene Ansicht in Pfeilrichtung X gemäß Fig. 9,
- Fig. 11: eine stark schematische Ansicht einer Rohbautür,
- Fig. 12: eine vergrößerte Ansicht des Bereichs XII in Fig. 11,
- Fig. 13: einen Schnitt in der Ebene XIII gemäß Fig. 12,
- Fig. 14: eine Ansicht in Pfeilrichtung XIV gemäß Fig. 12,
- Fig. 15: eine Ansicht einer weiteren Variante des Türschlosses,
- Fig. 16: einen Teilschnitt XVI-XVI gemäß Fig. 15,
- Fig. 17: einen Schnitt XVII gemäß Fig. 16,
- Fig. 18: eine Ansicht einer weiteren möglichen Ausführung einer mechanischen Schnittstellenanordnung,
- Fig. 19: eine Detailansicht in Pfeilrichtung XIX gemäß Fig. 18,
- Fig. 20: eine weitere Detailansicht in Pfeilrichtung XX gemäß Fig. 18,
- Fig. 21: eine Ansicht XXI gemäß Fig. 18,
- Fig. 22: eine Ansicht in Pfeilrichtung XXII gemäß Fig. 18,
- Fig. 23: eine schematische Darstellung eines Innenbetätigungshebels in drei möglichen Stellungen,
- Fig. 24: eine schematische Darstellung einer Rasteinrichtung des Innenbetätigungshebels nach Fig. 23,
- Fig. 25: eine Ausführungsvariante zu Fig.18,
- Fig. 26: eine weitere Ausführungsvariante zu Fig. 18 bzw. 25,
- Fig. 27: eine geschnittene Detailansicht in Pfeilrichtung XVII gemäß Fig. 26,
- Fig. 28: eine teilweise aufgeschnittene Perspektivansicht einer erfindungsgemäßen, fertig montierten Fahrzeugtür und
- Fig. 29: einen vergrößerten Teilschnitt XXIX gemäß Fig. 28.

In den verschiedenen Figuren der Zeichnung sind gleiche bzw. sich funktionell entsprechende Teile und Komponenten stets mit den gleichen Bezugszeichen versehen. Daher gilt jede auf eine bestimmte Figur bezogene Beschreibung eines Teils analog auch zu den anderen Zeichnungsfiguren, in denen das entsprechende Teil ebenfalls erkennbar ist.

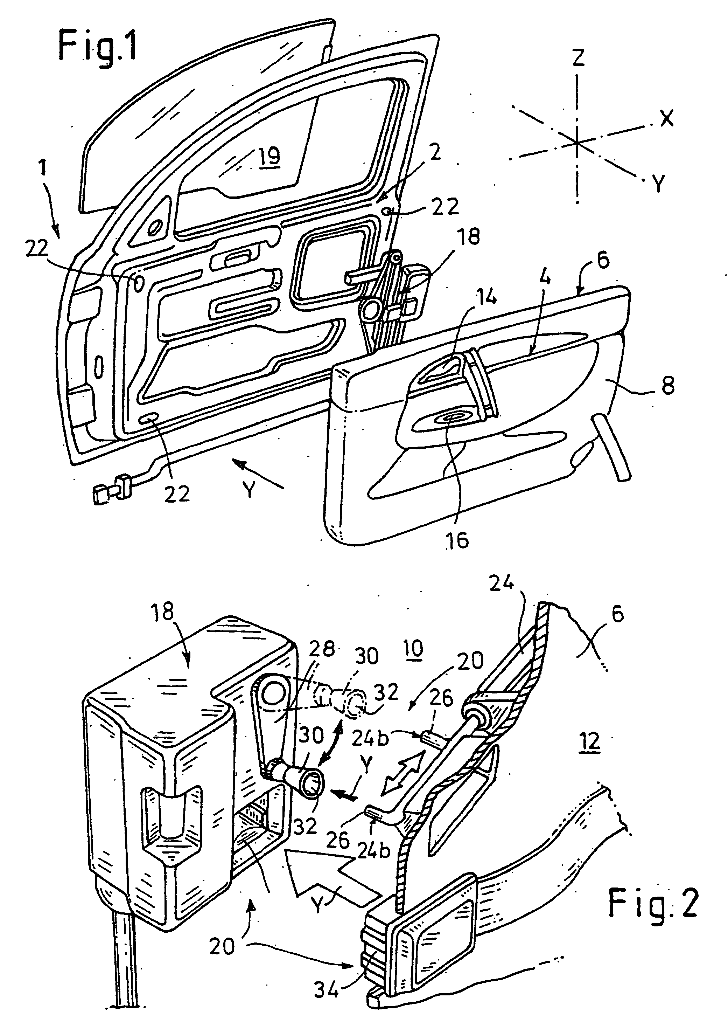

Wie sich zunächst aus Fig. 1 ergibt, wird eine Fahrzeugtür 1 modular aus einer - üblicherweise aus Metallblech bestehenden - Rohbautür 2 und einem Türmodul 4 aufgebaut. Das Türmodul 4 besteht aus Trägermitteln zur vormontierten Halterung von bestimmten, mechanischen und/oder elektrischen Funktionskomponenten der Fahrzeugtür 1 sowie aus Innenverkleidungsmitteln. Vorzugsweise sind die Trägermittel und die Innenverkleidungsmittel zu einem einheitlichen, im Wesentlichen aus Kunststoff bestehenden, flächigen, d. h. plattenartigen Modulträger 6 zusammengefaßt, der somit sowohl mechanische Tragfunktion hat, als auch als Tür-Innenverkleidung fungiert. Zusätzlich kann auf der dem Fahrzeug-Innenraum zugekehrten Innenseite des Modulträgers 6 noch eine Dekorverkleidung 8 befestigt werden.

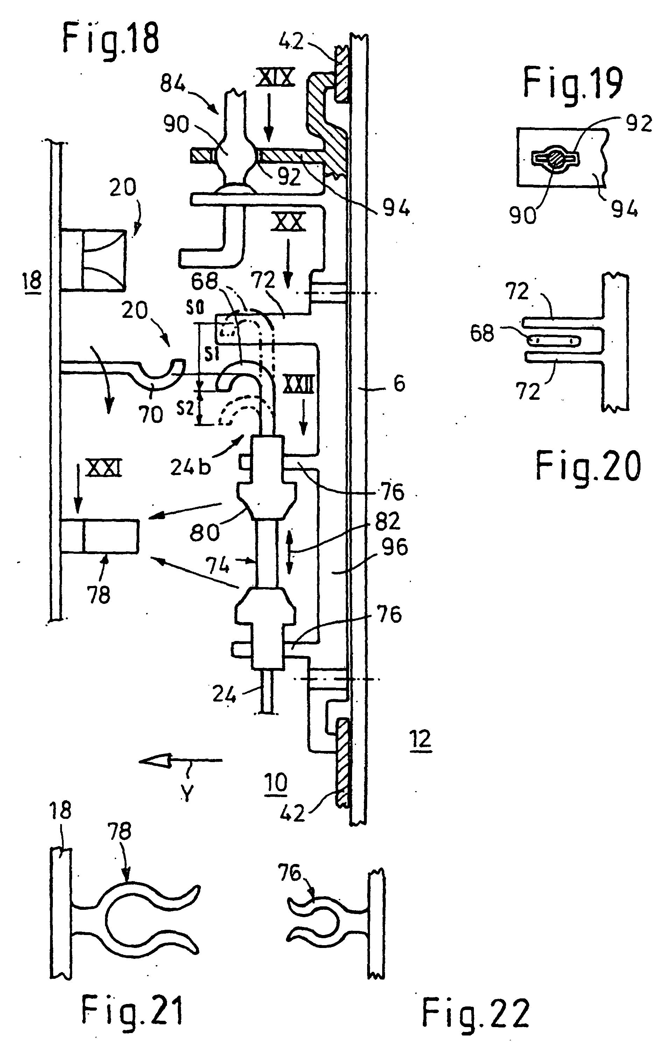

Der Modulträger 6 wird mit der Rohbautür 2 derart abgedichtet verbunden, dass ein äußerer, d. h. der Fahrzeugaußenseite zugekehrter Tür-Naßraum 10 von einem inneren, dem Fahrzeuginnenraum zugekehrten Trockenraum 12 getrennt wird (vgl. dazu beispielsweise die Fig. 18, 25 und 26).

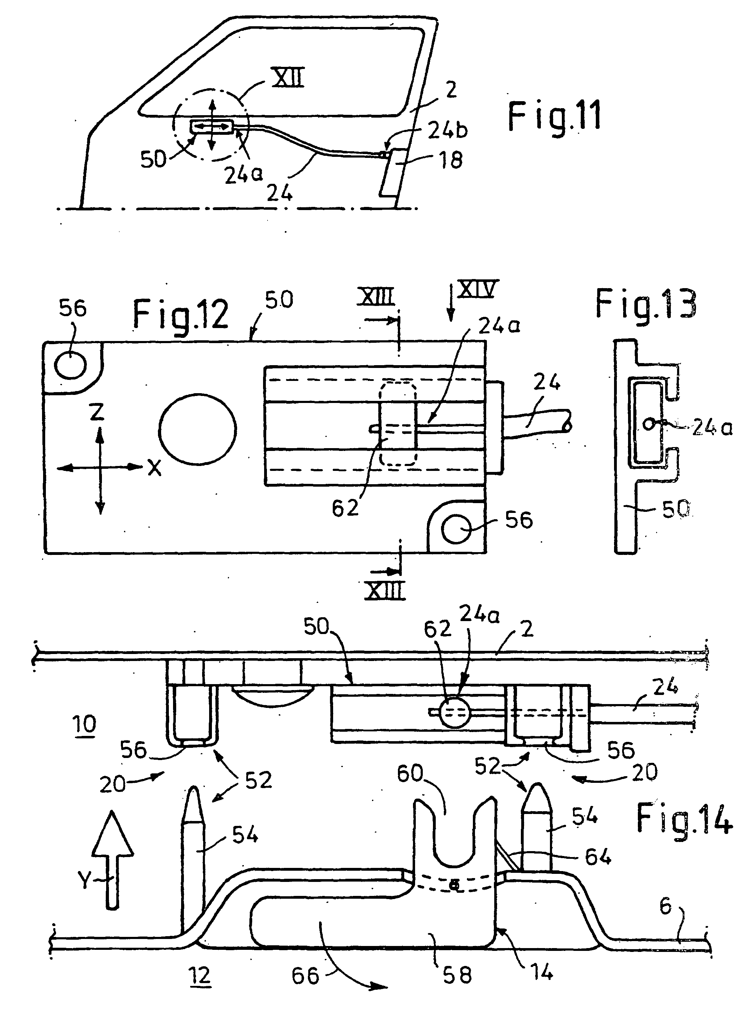

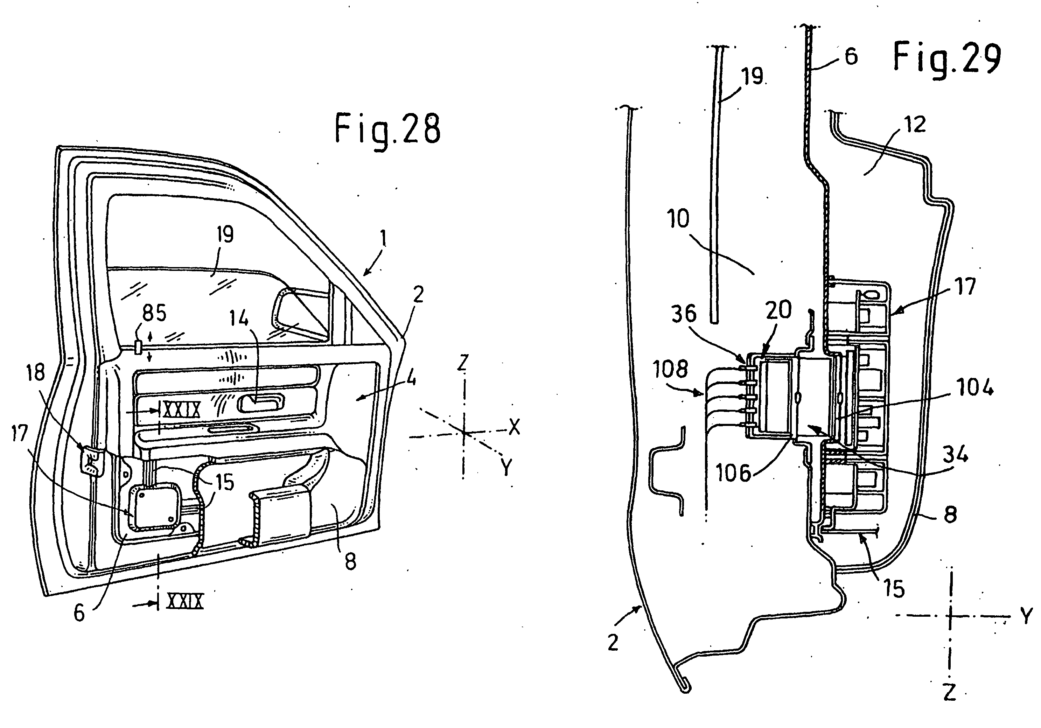

Bei den an dem Modulträger 6 vormontiert gehalterten Funktionselementen handelt es sich insbesondere um eine mechanische Türschloß-Innenbetätigung 14 und/oder elektrische Schalt/Steuerelemente 16 (siehe dazu insbesondere Fig. 1 und 14). Ferner können weitere nicht dargestellte Komponenten, wie beispielsweise ein Lautsprecher einer Audio-Anlage, eine sogenannte Einstiegsleuchte, ein elektrisches Tür-Funktions-Steuergerät 17 (vgl. dazu Fig. 28 und 29), ein Seiten-Airbag und dergleichen am Modulträger 6 vormontiert werden. Dabei sind alle elektrischen Komponenten vorzugsweise über einen Leitungssatz 15 miteinander verbunden, der z. B. in Form einer Flachbandleitung auf der Trockenraumseite des Modulträgers 6 befestigt wird (vgl. nochmals Fig. 28, 29).

Notwendigerweise werden weitere Türkomponenten im Naßraum 10 der Rohbautür 2 untergebracht; in der Zeichnung ist hauptsächlich ein Türschloß 18 dargestellt, welches mechanisch und bevorzugt im Zusammenhang mit einer Zentralverriegelungseinrichtung auch elektrisch betätigbar ist. Außerdem ist in der Rohbautür 2 ein elektrischer oder zumindest mechanischer Fensterheber (nicht dargestellt) für eine Fensterscheibe 19 (vgl. Fig. 1, 28 und 29) angeordnet.

Erfindungsgemäß sind für die mechanische und/oder elektrische Verbindung der an dem Modulträger 6 gehalterten Funktionskomponenten (z. B. 14, 16) mit den jeweils korrespondierenden Türkomponenten (z. B. 18), die im Tür-Naßraum 10 anzuordnen sind, spezielle Verbindungsmittel 20 derart vorgesehen, dass die Montageverbindung des fertig montierten, mit den Funktionskomponenten bestückten Modulträgers 6 mit der Rohbautür 2 durch eine Fügebewegung des Modulträgers 6 in einer Montagerichtung durchführbar ist, die insbesondere etwa einer horizontalen Fahrzeug-Querachse Y eines üblichen, in Fig. 1 und 28 eingezeichneten Fahrzeug-Koordinatensystems (Fahrzeug-Längsachse X, Querachse Y und Vertikalachse Z) entspricht, wobei erfindungsgemäß durch diese Montagebewegung aufgrund der Ausgestaltung der Verbindungsmittel 20 diese selbsttätig zusammengefügt werden. Dies bedeutet, dass bereits durch eine relativ grobe Positionsausrichtung des Modulträgers 6 relativ zur Rohbautür 2 sich die korrespondierenden Bestandteile der erfindungsgemäßen Verbindungsmittel 20 selbst finden. Dies stellt einen wesentlichen Montagevorteil dar, weil der Monteur die auf der dem Naßraum 10 zugekehrten Seite angeordneten Verbindungsmittel 20 nicht oder nur zum Teil sehen kann. Bei den erfindungsgemäßen Verbindungsmitteln 20 handelt es sich somit praktisch um mechanische und/oder elektrische Steckverbindungen, die selbstfindend, "blind" gefügt werden können. Nach dem Zusammenfügen braucht nur noch der Modulträger 6 an der Rohbautür 2 befestigt zu werden. Dies erfolgt vorzugsweise mittels einen randlichen Halteflansch des Modulträgers 6 durchgreifender Schrauben oder dergleichen Befestigungsmittel (in der Zeichnung nicht dargestellt).

In einer vorteilhaften Ausgestaltung der Erfindung weist der Modulträger 6 Positionierungsmittel derart auf, das während der Montage in der Montagerichtung Y über die mit der Rohbautür 2 zusammenwirkenden Positionierungsmittel eine selbsttätige Ausrichtung des Modulträgers 6 relativ zu der Rohbautür 2 erfolgt. In einer konkreten Ausführung kann dazu der Modulträger 6 auf seiner dem Naßraum 10 zugekehrten Fläche mindestens zwei z. B. stiftförmige Positionsansätze aufweisen (in der Zeichnung nicht erkennbar). Diese Positionsansätze greifen in korrespondierende Positionsöffnungen 22 (Fig. 1) der Rohbautür 2 ein. Dabei ist vorzugsweise einer der Positionsansätze zur exakten Ausrichtung dieses Flächenbereichs mit geringem Spiel in die zugehörige Positionsöffnung 22 einführbar, während der oder die anderen Positionsansätze ein bewußtes Bewegungsspiel zulassen. Hierbei sind vorteilhafterweise die erfindungsgemäßen Verbindungsmittel 20 in einem Flächenbereich des Modulträgers 6 angeordnet, der in räumlicher Nähe des mit geringem Spiel und damit sehr positionsgenau in die zugehörige Positionsöffnung 22 eingreifenden Positionsansatzes liegt. Auf diese Weise ist im Bereich der Verbindungsmittel 20 nur ein relativ geringes Bewegungsspiel möglich, was das selbstfindende Fügen begünstigt.

Im Folgenden sollen nun anhand der einzelnen Zeichnungsfiguren einige vorteilhafte Ausführungsmöglichkeiten der erfindungsgemäßen Verbindungsmittel 20 genauer beschrieben werden.

Gemäß Fig. 2 ist durch die Verbindungsmittel 20 eine mechanische Schnittstelle im Bereich des an der Rohbautür 2 zu befestigenden Türschlosses 18 gebildet. Bei dieser Ausführung ist ein insbesondere als Bowdenzug oder dergleichen ausgebildetes Bewegungs-Übertragungselement 24 auf der Naßraumseite des Modulträgers 6 fixiert. Die in Fig. 2 nicht erkennbare Schloß-Innenbetätigung 14 ist mit einem ersten, ebenfalls nicht dargestellten Ende (24a) des Verbindungselementes 24 verbunden, und ein zweites Ende 24b bildet mit dem Schloß 18 die mechanischen Verbindungsmittel 20. In der Ausführung nach Fig. 2 weist dazu das zweite Ende 24b des Übertragungselementes 24 einen sich in der Montagerichtung Y erstreckenden Steckansatz 26 auf, und das Schloß 18 weist an einem Betätigungshebel 28 ein Verbindungselement 30 mit einer korrespondierenden Stecköffnung 32 auf. Vorzugsweise ist diese Stecköffnung 32 trichterartig erweitert als Einführtrichter bzw. Findungstrichter für den Steckansatz 26 ausgebildet.

Wie sich weiterhin aus Fig. 2 ergibt, ist durch zusätzliche Verbindungsmittel 20 noch eine elektrische Schnittstelle gebildet. Dazu sind an dem Modulträger 6 - insbesondere unter Gewährleistung der dichten Trennung zwischen Naßraum 10 und Trockenraum 12 - Steckkontaktmittel 34 gehaltert. Dazu ist ein Kontaktgehäuse abgedichtet in einer Durchführöffnung des Modulträgers 6 gehaltert. Diese Steckkontaktmittel 34 wirken mit korrespondierenden Kontaktmitteln 36 zusammen, die auf der Seite der Rohbautür 2 anzuordnen sind. Im dargestellten Beispiel sind diese Kontaktmittel 36 bevorzugt mit dem Türschloß 18 kombiniert bzw. integriert.

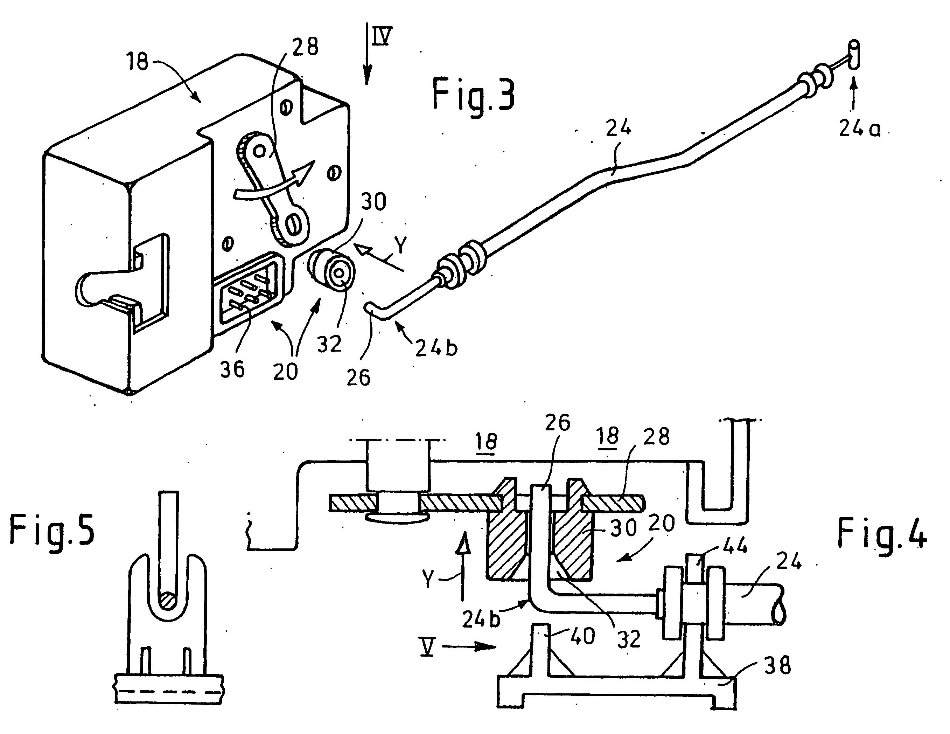

Die Ausführungsform gemäß Fig. 3 bis 5 entspricht weitgehend der Ausführung nach Fig. 2. Zusätzlich ist in Fig. 4 veranschaulicht, dass das zweite Ende 24b des Übertragungselementes 24 in einem zusätzlichen Führungsteil 38 gehalten ist, welches auf der Naßraumseite des Modulträgers 6 befestigt wird. Dabei weist dieses Führungsteil mit Vorteil im Bereich des Steckansatzes 26 ein Ansatzelement 40 derart auf, dass in der montierten Gebrauchsstellung der Steckansatz 26 gegen ein Herausrutschen aus der Stecköffnung 32 gesichert wird.

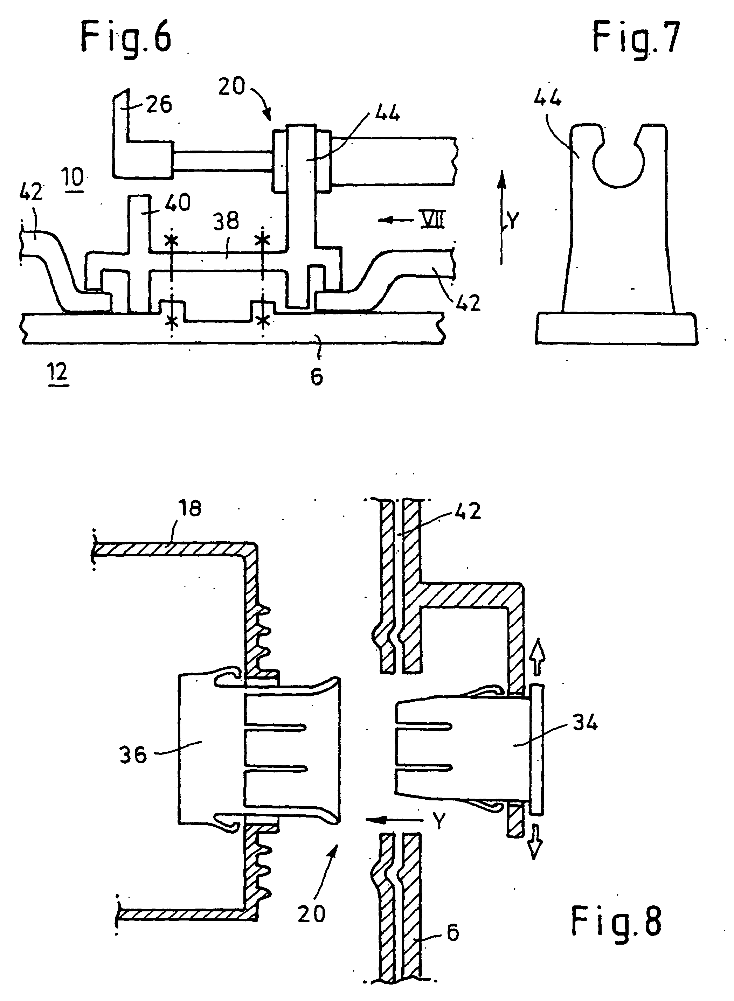

In Fig. 6 ist die Verbindung des Führungsteils 38 mit dem Modulträger 6 veranschaulicht. Bei dieser Ausführung ist zur Trennung zwischen Naßraum 10 und Trockenraum 12 eine zusätzliche Dichtungsfolie 42 auf der Naßraumseite des Modulträgers 6 angeordnet. Diese Dichtungsfolie 42 kann im Bereich des Führungsteils 38 eine Aussparung aufweisen und wird in dem die Aussparung umschließenden Randbereich klemmend zwischen dem Modulträger 6 und dem Führungsteil 38 gehalten.. Das Führungsteil 38 weist zudem ein Klemmelement 44 zur abstützenden Halterung eines Endes eines Mantels (Umhüllung) des Bowdenzuges auf. Das Klemmelement 44 bildet somit ein Widerlager für die Betätigung des Schlosses mittels des Bowdenzuges.

In Fig. 8 ist im Schnitt nochmals eine Ausführung der elektrischen Schnittstelle veranschaulicht. Auch bei dieser Ausführung ist die zusätzliche Dichtungsfolie 42 vorgesehen, die auch den Durchführbereich der Steckkontaktmittel 34, 36 zwischen dem Modulträger 6 und dem Schloß 18 abdichtet.

Alternativ dazu wäre es aber möglich, die Steckkontaktmittel 34 unmittelbar abgedichtet in einer Durchführung des Modulträger 6 anzuordnen. Dadurch könnte sich eine separate Dichtungsfolie erübrigen (vgl. dazu Fig. 28 und 29).

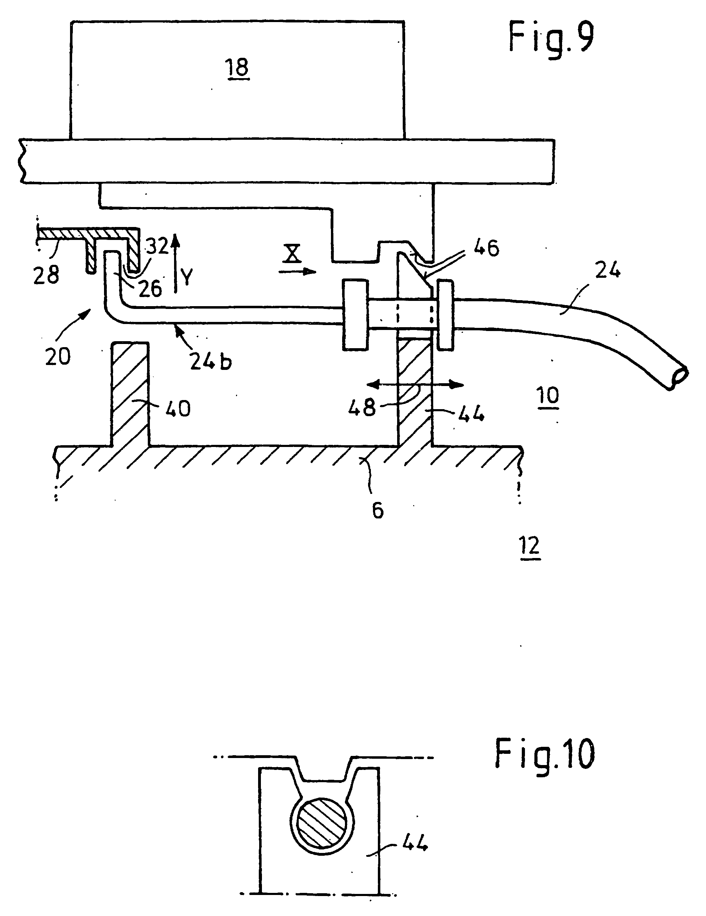

Die weitere Ausführungsform gemäß Fig. 9 entspricht im Wesentlichen den Ausführungen nach Fig. 3 bis 6. Zusätzlich ist hierbei vorgesehen, dass das die Hülle des Übertragungselementes 24 fixierende und abstützende Klemmelement 44 derart biegeelastisch ausgebildet ist, dass es im Zusammenwirken mit Einführschrägen 46 bei der Montage in Y-Richtung derart in Doppelpfeilrichtung 48 beweglich ist, dass dadurch der Steckansatz 26 relativ zu der Stecköffnung 32 positioniert wird. Diese Maßnahme erleichtert somit das selbstfindende Fügen der mechanischen Verbindungs mittel 20.

Die in den Fig. 11 bis 14 veranschaulichte Ausführungsvariante unterscheidet sich von den vorhergehend erläuterten Ausführungen insbesondere dadurch, dass gemäß Fig. 11 das Übertragungselement 24 rohbauseitig zwischen dem Türschloß 18 und einem zusätzlichen Führungsteil 50 angeordnet ist. Dieses Führungsteil 50 wird an der Rohbautür 2 in einem Bereich fixiert, der der Innenbetätigung 14 des Modulträgers 6 gegenüber liegt. Hierbei ist somit die mechanische Schnittstelle durch die Verbindungsmittel 20 zwischen der Schloß-Innenbetätigung 14 und dem Führungsteil 50 bzw. dem darin gehaltenen ersten Ende 24a des Übertragungselementes 24 gebildet. Vorzugsweise ist hierbei das Führungsteil 50 an der Rohbautür 2 schwimmend gelagert, d. h. in X- und Z- Richtung (vgl. Fig. 11) beweglich geführt und dadurch über Ausrichtmittel 52 bei der Montage des Modulträgers 6 in Y-Richtung selbstausrichtbar gelagert. Hierbei sind als Ausrichtmittel 52 auf der Naßraumseite des Modulträgers 6 Positionierungsansätze 54 angeordnet, die sich in Y-Richtung erstrecken und in korrespondierende Positionierungsöffnungen 56 des Führungsteils 50 eingreifen und dieses dadurch relativ zu der Innenbetätigung 14 exakt positionieren, um dann auch das Fügen der Innenbetätigung 14 mit dem Übertragungselement 24 zu ermöglichen. Die Innenbetätigung 14 weist hierbei einen manuell betätigbaren Hebel 58 auf, der abgedichtet durch eine Wandungsdurchführung des Modulträgers 6 geführt ist und auf der Seite des Naßraums 10 eine gabelartige Aufnahme 60 für ein hier bolzenförmiges Koppelelement 62 am ersten Ende 24a des Übertragungselementes 24 aufweist. In weiterer vorteilhafter Ausgestaltung ist hierbei vorgesehen, dass der Hebel 58 der Innenbetätigung 14 vor der ersten Montage des Modulträgers 6 in einer fügebereiten Nullstellung fixiert ist. Dies kann beispielsweise über eine Sollbruchstellenverbindung 64 zwischen dem Hebel 58 und dem Modulträger 6 gewährleistet werden. Bei einem ersten Betätigen des Hebels 58 in Pfeilrichtung 66 zerbricht diese Verbindung 64 und ermöglicht nachfolgend ungehinderte Betätigungsbewegungen des Hebels 58.

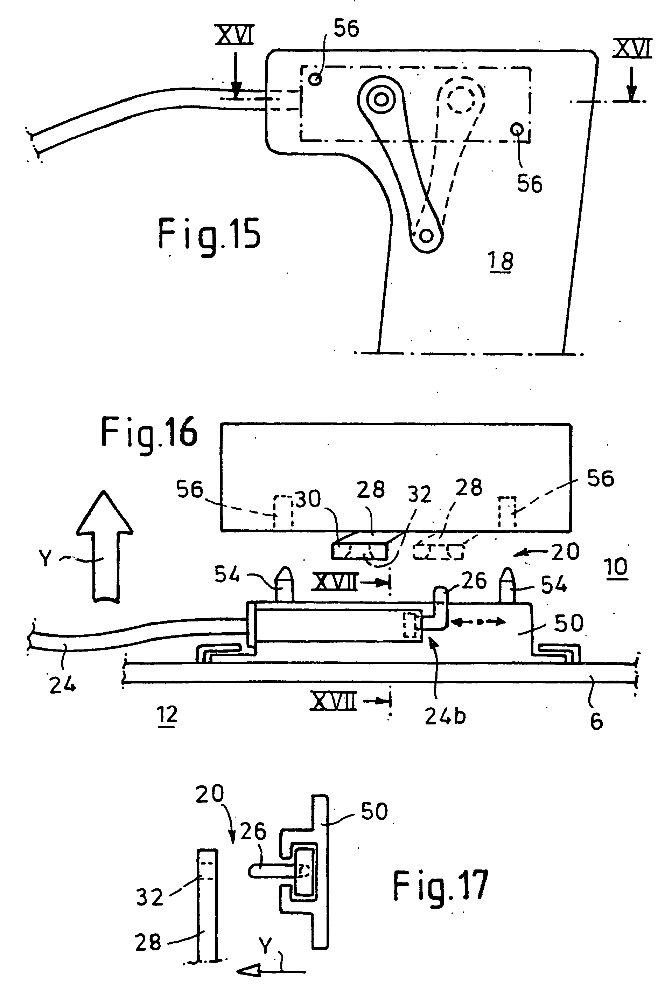

Bei der Ausführungsvariante gemäß Fig. 15 bis 17 ist analog zu Fig. 11 bis 14 eben'falls das Führungsteil 50 vorgesehen. Allerdings ist hierbei das Führungsteil 50 schwimmend auf der Naßraumseite des Modulträgers 6 geführt. Hierbei hält das Führungsteil 50 das zweite, schlosseitige Ende 24b des Übertragungselementes 24. Die mechanische Schnittstelle ist hierbei folglich durch die Verbindungsmittel 20 direkt am Türschloß 18 gebildet. Ähnlich Fig. 2 bis 6 weist das Übertragungselement 24 den Steckansatz 26 auf, der in die Stecköffnung 32 am Betätigungshebel 28 des Schlosses 18 eingreift. Zur Vorausrichtung des Führungsteils 50 weist dieses die Positionierungsansätze 54 auf, die in korrespondierende Öffnungen 56 des Schlosses 18 eingreifen.

Bei den bisher beschriebenen Ausführungsformen ist das Fügen der mechanischen Verbindungsmittel 20 zum Türschloß 18 hin stets in einer normalen Betätigungsgrundstellung des Handhebels 58 der Innenbetätigung 14 (vgl. dazu insbesondere Fig. 14) möglich.

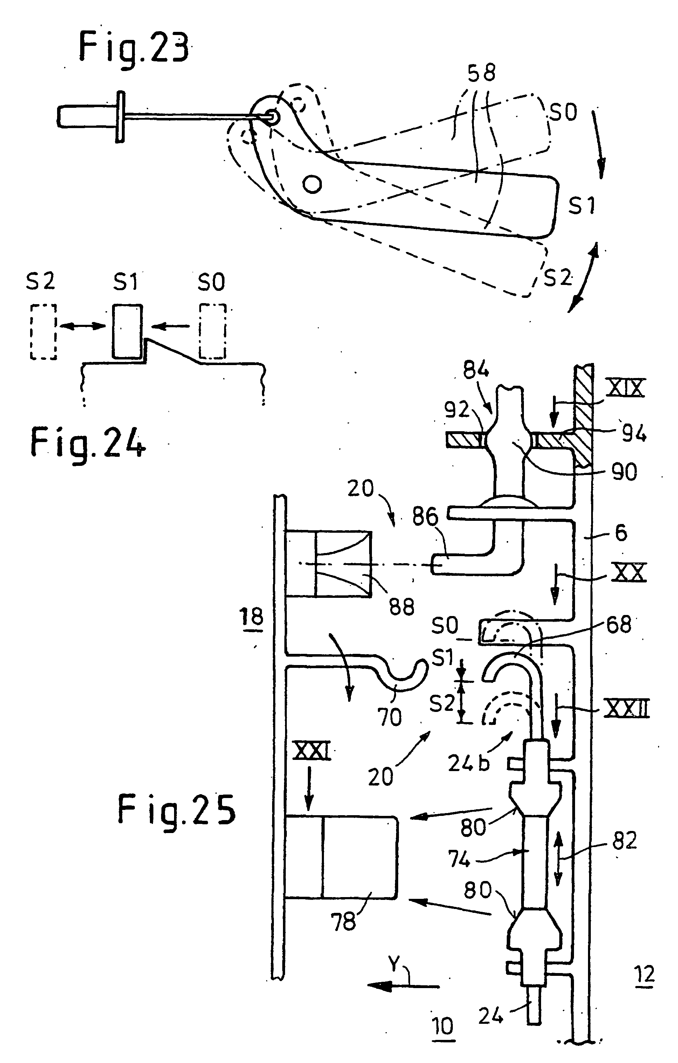

Davon unterscheiden sich die Ausführungen gemäß Fig. 18 bis 25 insofern, als dabei das Fügen der mechanischen Verbindungsmittel 20 bei der Montage des Modulträgers 6 nur in einer speziellen Montagestellung des Hebels 58 der Innenbetätigung 14 durchführbar ist. Nach dem erfolgen Fügen oder für den eigentlichen Fügevorgang der Verbindungsmittel 20 ist der Hebel 58 der Innenbetätigung 14 in die normale Betätigungsgrundstellung überführbar. Dies ist in Fig. 23 veranschaulicht. Dabei sind die spezielle Montagestellung mit S0, die Betätigungsgrundstellung mit S1 und die Betätigungsstellung zum Öffnen des Schlosses mit S2 bezeichnet. In den Fig. 18 und 25 sind die entsprechenden Stellungen des schlosseitigen Endes 24b des Übertragungselementes 24 mit den gleichen Bezeichnungen versehen. Üblicherweise ist der Hebel 58 der Innenbetätigung 14 in einer zum Fahrgastraum hin offenen muldenartigen Aufnahme angeordnet. In der Betätigungsgrundstellung S1 liegt der Hebel 58 dann im Wesentlichen in der Öffnungsebene der muldenförmigen Aufnahme. Zur Schloß-Öffnungsbewegung wird der Hebel 58 in die Stellung S2 herausgezogen. In der speziellen Montagestellung S0 liegt der Hebel 58 schräg in die Mulde hinein versenkt. Gemäß Fig. 24 kann hierbei eine Rasteinrichtung vorgesehen sein, die ein Überführen des Hebels 58 aus der Montagestellung S0 in die Grundstellung S1 ermöglicht, eine Rückbewegung zurück in die Stellung S0 aber ausschließt. Zwischen den Stellungen S1 und S2 sind beliebige Hin- und Herbewegungen möglich.

Weiterhin ist bei den Ausführungen nach Fig. 18 bis 25 vorgesehen, dass die Verbindungsmittel 20 zwischen dem schlosseitigen Ende 24b des Übertragungselementes 24 und dem Schloß 18 durch eine Hakenverbindung gebildet sind. Hierbei erstreckt sich ein Hakenende 68 des Übertragungselementes 24 zunächst etwa parallel zu dem Modulträger 6 und dann bogenförmig um etwa 180° in. Richtung des Schlosses 18. Das Schloß 18 weist ein entsprechend entgegengerichtetes Hakenelement 70 auf. Diese Hakenverbindung kann in Y-Richtung nicht ohne weiteres in der Grundstellung S1 gefügt werden, sondern erst durch die spezielle Montagestellung S0 Um das Hakenende 68 in einer einhängbereiten Stellung zu halten, ist das Hakenende 68 zwischen zwei Führungsstegen 72 geführt und dadurch gegen Verdrehen um die Längsachse des Übertragungselementes 24 gesichert.

Ein weiteres Ausgestaltungsmerkmal besteht darin, dass das Ende 24b des Übertragungselementes 24 in einem Führungsteil 72 gehalten ist, wobei dieses Führungsteil 74 von einem länglichen, elastischen Formteil gebildet ist. Dieses Führungsteil 74 umschließt das Ende der Ummantelung des Übertragungselementes 24 schlauchartig. Hierbei wird das Führungsteil 74 vor der Montage des Modulträgers 6 über vorzugsweise zwei Klemmelemente 76 (siehe dazu auch Fig. 22) modulträgerseitig vorfixiert. Bei der Montage in Y-Richtung wird dann das Führungsteil 74 an ein schlosseitiges Klemmelement 78 übergeben bzw. von diesem übernommen. Das schlosseitige Klemmelement 78 besitzt eine höhere Klemmkraft als die Klemmelement 76 auf der Seite des Modulträgers 6. Dadurch wird erreicht, dass im Falle einer späteren Demontage des Modulträgers 6 das Führungsteil 74 schlosseitig gehalten bleibt, was deshalb sinnvoll ist, weil auch die Hakenverbindung 68, 70 eingehängt bleibt.

Es ist hierbei weiterhin vorteilhaft, wenn das Führungsteil 74 beidseitig eines mittleren, mit dem schlosseitigen Klemmelement 78 zusammenwirkenden Abschnittes sich konisch erweiternde Einführschrägen 80 aufweist, die im Zusammenwirken mit dem Klemmelement 78 eine ausrichtende Verschiebung des Führungsteils 74 in Doppelpfeilrichtung 82 bewirken, um dadurch auch das Hakenende 68 relativ zu dem Hakenelement 70 zu positionieren.

Gemäß Fig. 18 und 25 ist bevorzugt weiterhin vorgesehen, dass an dem Modulträger 6 eine zusätzliche Türschloß-Verriegelungsbetätigung 84 gehaltert ist, die üblicherweise als Betätigungs- und Sichtkontrollelement ein nur in Fig. 28 dargestelltes Stiftelement 85 aufweist, welches in einem der Fensterscheibe 19 benachbarten, oberen Bereich der Tür- Innenverkleidung angeordnet iet. Auch diese zusätzliche Verriegelungsbetätigung 84 ist erfindungsgemäß über weitere Verbindungsmittel 20, die eine mechanische Schnittstelle bilden, mit dem Türschloß 18 verbindbar. Dazu sind - analog zu Fig. 2 bis 6 - als eine in Y-Richtung fügbare Steckverbindung ein Stiftansatz 86 und eine korrespondierende Stiftaufnahme 88 vorgesehen. Auch hierbei kann im Bereich der Stiftaufnahme 88 ein Findungstrichter gebildet sein. Zweckmäßigerweise ist auch hier der Stiftansatz 86 gegen Verdrehen gesichert geführt, wozu in der dargestellten Ausführung eine Betätigungsstange mit einem von der Kreisform abweichenden Querschnittbereich 90 in einer korrespondierenden Aufnahme 92 eines Führungsansatzes 94 geführt ist. Dazu wird ergänzend auch auf Fig. 19 verwiesen. Daraus ist erkennbar, dass es sich beispielsweise um einen schlüssellochartigen Querschnitt der Teile 90, 92 handeln kann.

Bei der Ausführungsvariante nach Fig. 18 sind die modulträgerseitigen Verbindungsteile an einem separaten Halteteil 96 angeordnet, welches unter Einschluß der bereits erwähnten Dichtungsfolie 42 mit dem Modulträger 6 verbunden, insbesondere verschraubt ist. Bei der Variante nach Fig. 25 bildet der Modulträger 6 unmittelbar die Dichtung zwischen Naßraum 10 und Trockenraum 12, so dass auf die Dichtungsfolie und vorteilhafterweise auch auf das separate Halteteil 96 verzichtet werden kann. Vielmehr sind hierbei die Verbindungsteile einstückig mit dem Modulträger 6 ausgebildet.

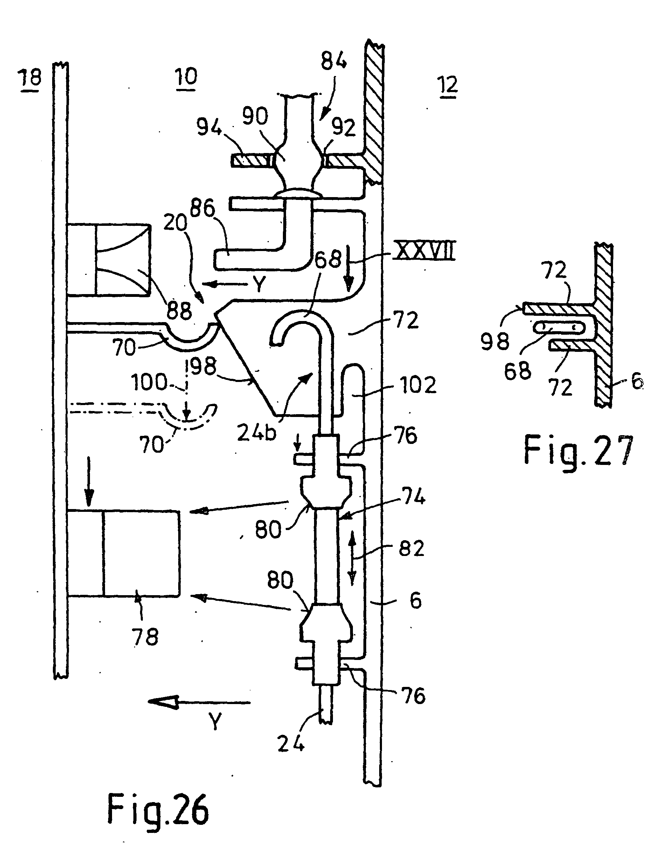

Was die Ausführungsform gemäß Fig. 26 und 27 betrifft, so entspricht diese im Wesentlichen den Ausführungen nach Fig. 18 und 25. Unterschiedlich ist lediglich die Art des Fügens der Hakenverbindung 68, 70, die hier die gesonderte Montagestellung S0 entbehrlich macht. Dazu ist hier modulträgerseitig eine Betätigungsschräge 98 dem Hakenende 68 in Montagerichtung Y derart vorgeordnet, dass bei der Montagebewegung in Y-Richtung das schlosseitige Hakenelement 70 zur Anlage an der Betätigungsschräge 98 gelangt und durch die Y-Bewegung in Pfeilrichtung 100 in eine einhängbereite Stellung bewegt wird. Nach der Montage gelangt das Hakenelement 70 in den Bereich eines Freiraums 102, wodurch es sich zurückbewegen und dadurch mit dem Hakenende 68 verbinden kann. Es ist vorteilhaft, wenn die Betätigungsschräge 98 an einer Verlängerung wenigstens eines der Führungsstege 72 gebildet ist.
Schließlich ist in den Fig. 28 und 29 noch eine Ausführungsform der Erfindung veranschaulicht, wobei zur Bildung einer elektrischen Schnittstelle elektrische Verbindungsmittel 20 im Bereich des oben schon erwähnten Türsteuergerätes 17 angeordnet sind. Hierbei sind die Steckkontaktmittel 34 mit einem gemeinsamen Kontaktgehäuse über eine Dichtung 104 abgedichtet in einer Durchführöffnung des Modulträgers 6 gehalten. An der Rohbautür 2 sind die korrespondierenden Kontaktmittel 36 befestigt. Die Steckkontaktmittel 34 sind gegen die Kontaktmittel 36 über eine weitere Dichtung 106 abgedichtet. Hierbei sind vorteilhafterweise die Steckkontaktmittel 34 unmittelbar mit einer Leiterplatte des Türsteuergerätes 17 verbunden, bilden somit einen integrierten Bestandteil des Türsteuergerätes 17. Die Kontaktmittel 36 sind innerhalb der Rohbautür 2 über Leitungen 108 mit entsprechenden elektrischen Komponenten verbunden.

Die Erfindung ist nicht auf die konkret dargestellten und beschriebenen Ausführungsbeispiele beschränkt, sondern umfaßt auch alle im Sinne der Erfindung gleichwirkenden Ausführungen. So ist es auch möglich, den vormontierten Modulträger 6 zunächst in einer zur Tür-Montageebene schräg geneigten Stellung mit einem Randbereich (insbesondere oben) in die Rohbautür 2 einzuhängen und dann gegen die Rohbautür 2 (insbesondere nach unten) zu schwenken. Dabei erfolgt das selbstfindende Fügen der Verbindungsmittel 20 jeweils entsprechend einer Kreisbahnbewegung (rotatorisches Einschwenken).

## Patentansprüche

1. Türmodul (4) für eine Fahrzeugtür (1), bestehend aus Trägermitteln mit vormontiert gehalterten, mechanischen und/oder elektrischen Funktionskomponenten (14, 16) der Fahrzeugtür (1), wobei die Trägermittel mit einer Rohbautür (2) derart abgedichtet verbindbar sind, dass ein Tür-Nassraum (10) von einem Trockenraum (12) getrennt wird, **dadurch gekennzeichnet, dass** zur mechanischen Verbindung mindestens einer der an den Trägermitteln gehalterten Funktionskomponenten (14, 16) mit mindestens einer im Tür-Nassraum (10) an der Rohbautür (2) angeordneten, mechanischen Türkomponente (18) Verbindungsmittel (20) derart ausgebildet und zumindest teilweise am Türmodul angeordnet sind, dass eine Montage der Trägermittel in einer - insbesondere etwa einer horizontalen Fahrzeug-Querachse (Y) eines üblichen Fahrzeug-Koordinatensystems (X, Y, Z) entsprechenden - Montagerichtung unter selbstfindendem Fügen der Verbindungsmittel (20) durchführbar ist.

2. Türmodul nach Anspruch 1, **dadurch gekennzeichnet, dass** die Trägermittel mit Innenverkleidungsmitteln zu einem einheitlichen, im Wesentlichen aus Kunststoff bestehenden Modulträger (6) zusammengefasst sind.

3. Türmodul nach Anspruch 2, **dadurch gekennzeichnet, dass** der Modulträger (6) Positionierungsmittel derart aufweist, dass während der Montage in der Montagerichtung (Y) über die mit der Rohbautür (2) zusammenwirkenden Positionierungsmittel eine selbsttätige Ausrichtung des Modulträgers (6) relativ zu der Rohbautür (2) erfolgt.

4. Türmodul nach Anspruch 3, **dadurch gekennzeichnet, dass** die Positionierungsmittel von mindestens zwei Positionsansätzen zum Eingreifen in korrespondierende Positionsöffnungen (22) gebildet sind, wobei vorzugsweise einer der Positionsansätze zur exakten Ausrichtung mit geringem Spiel in die zugehörige Positionsöffnung (22) einführbar ist und die Verbindungsmittel (20) in einem in räumlicher Nähe dieses Positionsansatzes liegenden Flächenbereich des Modulträgers (6) angeordnet sind.

5. Türmodul nach einem der Ansprüche 2 bis 4, **dadurch gekennzeichnet, dass** an dem Modulträger (6) - insbesondere unter Gewährleistung der dichten Trennung zwischen Nassraum (10) und Trockenraum (12) - eine Türschloss-Innenbetätigung (14) gehaltert ist, die über - eine mechanische Schnittstelle bildende - Verbindungsmittel (20) mit einem an der Rohbautür (2) gehalterten Türschloss (18) verbindbar ist.

6. Türmodul nach Anspruch 5, **dadurch gekennzeichnet, dass** die Verbindungsmittel (20) zwischen der Innenbetätigung (14) und einem ersten Ende (24a) eines an der Rohbautür (2) anzuordnenden, mit einem zweiten Ende (24b) auf das Türschloss (18) wirkenden Übertragungselementes (24), insbesondere Bowdenzuges oder dergleichen, gebildet sind.

7. Türmodul nach Anspruch 5, **dadurch gekennzeichnet, dass** die Innenbetätigung (14) mit einem ersten Ende (24a) eines auf der Nassraumseite (10) am Modulträger (6) angeordneten, insbesondere als Bowdenzug oder dergleichen ausgebildeten Übertragungselementes (24) verbunden ist, wobei die Verbindungsmittel (20) zwischen einem zweiten Ende (24b) des Übertragungselementes (24) und dem Türschloss (18) gebildet sind.

8. Türmodul nach Anspruch 6 oder 7, **dadurch gekennzeichnet, dass** das schnittstellenseitige Ende (24a/24b) des Übertragungselementes (24) an einem schwimmend und dadurch über Ausrichtmittel (52) bei der Montage des Modulträgers (6) selbstausrichtbar gelagerten Führungsteil (50) gehalten ist.

9. Türmodul nach Anspruch 8, **dadurch gekennzeichnet, dass** das Führungsteil (74) vor einer ersten Montage des Modulträgers (6) auf dessen Nassraumseite rastend vorfixiert ist und durch die Montage selbsttätig an eine rohbautürseitige Halterung (78) übergeben wird.

10. Türmodul nach einem der Ansprüche 5 bis 9, **dadurch gekennzeichnet, dass** ein Fügen der mechanischen Verbindungsmittel (20) bei der Montage des Modulträgers (6) in einer Betätigungsgrundstellung (S1) der Innenbetätigung (14) durchführbar ist.

11. Türmodul nach einem der Ansprüche 5 bis 9, **dadurch gekennzeichnet, dass** ein Fügen der mechanischen Verbindungsmittel (20) bei der Montage des Modulträgers (6) in einer speziellen Montagestellung (S0) der Innenbetätigung (14) durchführbar ist, wobei die Innenbetätigung (14) nach dem bzw. zum Fügen in ihre Betätigungsgrundstellung (S1) überführbar ist.

12. Türmodul nach einem der Ansprüche 2 bis 11, **dadurch gekennzeichnet, dass** an dem Modulträger (6) - insbesondere unter Gewährleistung der dichten Trennung zwischen Nassraum (10) und Trockenraum (12) - eine Türschloss-Verriegelungsbetätigung (84) gehaltert ist, die über - eine mechanische Schnittstelle bildende - Verbindungsmittel (20) mit dem/einem an der Rohbautür (2) gehalterten Türschloss (18) verbindbar ist.

13. Türmodul nach einem der Ansprüche 2 bis 12, **dadurch gekennzeichnet, dass** an dem Modulträger (6) - insbesondere unter Gewährleistung der dichten Trennung zwischen Nassraum (10) und Trockenraum (12) - mindestens eine elektrische Schnittstelle bildende - Steckkontaktmittel (34) gehaltert sind.

14. Türmodul nach Anspruch 13, **dadurch gekennzeichnet, dass** elektrische Verbindungsmittel (20) aus den, am Modulträger (6) gehalterten Steckkontaktmitteln (34) und auf der Seite der Rohbautür (2) anzuordnenden, korrespondierenden Gegensteckmitteln (36) bestehen.

15. Türmodul nach Anspruch 14, **dadurch gekennzeichnet, dass** die Gegensteckmittel (36) integrierter Bestandteil eines Türschlosses (18) sind.

16. Türmodul nach Anspruch 14 oder 15, **dadurch gekennzeichnet, dass** die Steckkontaktmittel (34) Bestandteil eines elektrischen Türsteuergerätes (17) sind.

17. Fahrzeugtür (1), bestehend aus einer Rohbautür (2) insbesondere aus Metallblech, an der Rohbautür (2) gehalterten Türkomponenten (18, 36) sowie einem mit der Rohbautür (2) verbundenen, vormontierte Funktionskomponenten (14, 15,16,17) tragenden Türmodul (4), **dadurch gekennzeichnet, dass** die mechanischen Funktionskomponenten mit den Türkomponenten über selbstfindende, zumindest teilweise am Türmodul angeordnete Verbindungsmittel (20) in einer Montagerichtung des Türmoduls (4) zusammengefügt sind, die insbesondere etwa einer Querachse (Y) eines üblichen Fahrzeug-Koordinatensystems (X, Y, Z) entspricht.

18. Fahrzeugtür nach Anspruch 17, **gekennzeichnet, durch** eine Ausgestaltung des Türmoduls (4) nach einem der Ansprüche 1 bis 16.

19. Verfahren zur Montage einer Fahrzeugtür (1), wobei bestimmte Funktionskomponenten der Fahrzeugtür (1) an einem Türmodul (4) vormontiert werden und das vormontierte Türmodul (4) dann mit einer Rohbautür (2) unter Herstellung von Verbindungen zwischen den türmoduiseitigen Funktionskomponenten und rohbautürseitig angeordneten Türkomponenten verbunden wird, **dadurch gekennzeichnet, dass** das Türmodul (4) in einer insbesondere einer Fahrzeug-Querachse (Y) entsprechenden Montagerichtung unter selbstfindendem Steckfügen von mechanischen, zumindest teilweise am Türmodul angeordneten Verbindungsmitteln (20) gegen die Rohbautür (2) montiert wird.

20. Verfahren nach Anspruch 19, **dadurch gekennzeichnet, dass** die zwischen einer modulseitigen Schloss-Innenbetätigung (14) und einem Türschloss (18) angeordneten Verbindungsmittel (20) in einer Betätigungsgrundstellung (S1) der Innenbetätigung (14) gefügt werden, wobei vorzugsweise nach der Montage Fixiermittel, die die Innenbetätigung (14) montagebereit in der Grundstellung (S1) halten, durch eine erste Betätigungsbewegung in eine Öffnungsstellung (S2) insbesondere durch Zerstören einer Sollbruchstellenverbindung (64) gelöst werden.

21. Verfahren nach Anspruch 19, **dadurch gekennzeichnet, dass** die zwischen einer modulseitigen Schloss-Innenbetätigung (14) und einem Türschloss (18) angeordneten Verbindungsmittel (20) in einer speziellen Montagestellung (S0) der Innenbetätigung (14) gefügt werden, wobei nach der Montage die Innenbetätigung (14) - insbesondere irreversibel - aus der Montagestellung (S0) in eine Betätigungsgrundstellung (S1) überführt wird.

22. Verfahren nach einem der Ansprüche 19 bis 21, **dadurch gekennzeichnet, dass** das Türmodul (4) nach vollständiger Fügebewegung in der Montagerichtung (Y) an der Rohbautür (2) insbesondere mittels randlicher Schraubbefestigungselemente befestigt wird.

## Claims

1. Door module (4) for a vehicle door (1), comprising carrier means with mechanical and/or electric functional components (14, 16) of the vehicle door (1) that are secured in a pre-assembly process, the carrier means being connectable to a bodyshell door (2) in a sealed manner such that a door wet space (10) is separated from a dry space (12), **characterized in that**, in order to mechanically connect at least one of the functional components (14, 16) secured on the carrier means to at least one mechanical door component (18) arranged in the door wet space (10) on the bodyshell door (2), connecting means (20) are formed and are at least partially arranged on the door module in such a manner that an installation of the carrier means can be carried out in one installation direction - corresponding in particular approximately to a horizontal vehicle transverse axis (Y) of a customary vehicle coordinate system (X,Y,Z) - with self-finding joining of the connecting means (20).

2. Door module according to Claim 1, **characterized in that** the carrier means are combined with internal lining means to form a uniform module carrier (6) essentially consisting of plastic.

3. Door module according to Claim 2, **characterized in that** the module carrier (6) has positioning means such that, during the installation in the installation direction (Y), the module carrier (6) is automatically aligned relative to the bodyshell door (2) via the positioning means, which interact with the bodyshell door (2).

4. Door module according to Claim 3, **characterized in that** the positioning means are formed by at least two positioning lugs for engaging in corresponding positioning openings (22), preferably one of the positioning lugs being insertable into the associated positioning opening (22) with little play for the purpose of exact alignment, and the connecting means (20) being arranged in a surface region of the module carrier (6), which region lies in the spatial vicinity of this positioning lug.

5. Door module according to one of Claims 2 to 4, **characterized in that** a door-lock internal-actuating means (14) is secured on the module carrier (6) - in particular with the leakproof separation between the wet space (10) and dry space (12) being ensured, it being possible for the said door-lock internal-actuating means to be connected via connecting means (20) - forming a mechanical interface - to a door lock (18) secured on the bodyshell door (2).

6. Door module according to Claim 5, **characterized in that** the connecting means (20) are formed between the internal-actuating means (14) and a first end (24a) of a transmission element (24), in particular Bowden cable or the like, which is to be arranged on the bodyshell door (2) and acts with a second end (24b) on the door lock (18).

7. Door module according to Claim 5, **characterized in that** the internal-actuating means (14) is connected to a first end (24a) of a transmission element (24) which is arranged on the module carrier (6) on the wet-space side (10) and is designed in particular as a Bowden cable or the like, the connecting means (20) being formed between a second end (24b) of the transmission element (24) and the door lock (18).

8. Door module according to Claim 6 or 7, **characterized in that** the interface end (24a/24b) of the transmission element (24) is held on a guide part (50) which is mounted in a floating manner and, as a result, in a manner such that it can be self-aligned via aligning means (52) during the installation of the module carrier (6).

9. Door module according to Claim 8, **characterized in that**, prior to a first installation of the module carrier (6), the guide part (74) is prefixed in a latching manner on the wet-space side of the said module carrier and is automatically transferred by the installation onto a securing means (78) on the bodyshell-door side.

10. Door module according to one of Claims 5 to 9, **characterized in that** a joining of the mechanical connecting means (20) can be carried out during the installation of the module carrier (6), in a normal actuating position (S1) of the internal-actuating means (14).

11. Door module according to one of Claims 5 to 9, **characterized in that** a joining of the mechanical connecting means (20) during the installation of the module carrier (6) can be carried out in a special installation position (S0) of the internal-actuating means (14), it being possible for the internal-actuating means (14) to be transferred into its normal actuating position (S1) after the joining or for the joining.

12. Door module according to one of Claims 2 to 11, **characterized in that** a door-lock locking-actuating means (84) is secured on the module carrier (6) - in particular with the leakproof separation between the wet space (10) and dry space (12) being ensured, it being possible for the said door-lock locking-actuating means to be connected via connecting means (20) - forming a mechanical interface - to the/a door lock (18) secured on the bodyshell door (2).

13. Door module according to one of Claims 2 to 12, **characterized in that** plug-in contact means (34) - forming at least one electric interface - are secured on the module carrier (6) - in particular with the leakproof separation between the wet space (10) and dry space (12) being ensured.

14. Door module according to Claim 13, **characterized in that** electric connecting means (20) comprise the plug-in contact means (34) secured on the module carrier (6) and corresponding mating plug-in means (36) to be arranged on the side of the bodyshell door (2).

15. Door module according to Claim 14, **characterized in that** the mating plug-in means (36) are an integrated part of a door lock (18).

16. Door module according to Claim 14 or 15, **characterized in that** the plug-in contact means (34) are part of an electric door control device (17).

17. Vehicle door (1), comprising a bodyshell door (2) in particular of metal sheet, door components (18, 36) secured on the bodyshell door (2) and a door module (4) which is connected to the bodyshell door (2) and bears pre-assembled functional components (14, 15, 16, 17), **characterized in that** the mechanical functional components are joined to the door components via self-finding connecting means (20), which are at least partially arranged on the door module, in an installation direction of the door module (4) that corresponds in particular approximately to a transverse axis (Y) of a customary vehicle coordinate system (X, Y, Z).

18. Vehicle door according to Claim 17, **characterized by** a configuration of the door module (4) according to one of Claims 1 to 16.

19. Method for the installation of a vehicle door (1), certain functional components of the vehicle door (1) being pre-assembled on a door module (4) and the pre-assembled door module (4) then being connected to a bodyshell door (2) with the production of connections between the functional components on the door-module side and door components arranged on the bodyshell-door side, **characterized in that** the door module (4) is fitted in an installation direction corresponding in particular to a vehicle transverse axis (Y) with self-finding plug-in joining of mechanical connecting means (20), which are at least partially arranged on the door module, against the bodyshell door (2).

20. Method according to Claim 19, **characterized in that** the connecting means (20), which are arranged between a module-side lock internal-actuating means (14) and a door lock (18) are joined in a normal actuating position (S1) of the internal-actuating means (14), fixing means which hold the internal-actuating means (14) in the normal position (S1) in a manner ready for installation preferably being released after the installation by means of a first actuating movement into an open position (S2), in particular by destruction of a predetermined breaking-point connection (64).

21. Method according to Claim 19, **characterized in that** the connecting means (20), which are arranged between a module-side lock internal-actuating means (14) and a door lock (18), are joined in a special installation position (S0) of the internal-actuating means (14), the internal-actuating means (14) being transferred after the installation - in particular irreversibly - from the installation position (S0) into a normal actuating position (S1).

22. Method according to one of Claims 19 to 21, **characterized in that**, after the complete joining movement in the installation direction (Y), the door module (4) is fastened to the bodyshell door (2) in particular by means of edge screw-fastening elements.

## Revendications

1. Module de porte (4) pour une porte de véhicule (1), se composant de moyens de support comprenant des composants fonctionnels (14, 16) mécaniques et/ou électriques de la porte de véhicule (1), fixés sous forme prémontée, les moyens de support pouvant être connectés à une construction brute de porte (2) de manière étanche de telle sorte qu'un espace humide de la porte (10) soit séparé d'un espace sec (12), **caractérisé en ce que** pour la connexion mécanique d'au moins l'un des composants fonctionnels (14, 16) fixés sur les moyens de support à au moins un composant de porte (18) mécanique disposé dans l'espace humide de la porte (10) sur la construction brute de porte (2), des moyens de connexion (20) sont réalisés de telle sorte, et disposés au moins partiellement sur le module de porte de telle sorte qu'un montage des moyens de support dans une direction de montage - correspondant notamment approximativement à un axe transversal horizontal (Y) du véhicule d'un système de coordonnées de véhicule usuel (X, Y, Z) - puisse être effectué par assemblage auto-guidant des moyens de connexion (20).

2. Module de porte selon la revendication 1, **caractérisé en ce que** les moyens de support sont assemblés avec des moyens d'habillage interne pour former un support modulaire (6) unitaire se composant essentiellement de plastique.

3. Module de porte selon la revendication 2, **caractérisé en ce que** le support modulaire (6) présente des moyens de positionnement de telle sorte que pendant le montage dans la direction de montage (Y) par l'intermédiaire des moyens de positionnement coopérant avec la construction brute de porte (2), il se produit un alignement automatique du support modulaire (6) par rapport à la construction brute de porte (2).

4. Module de porte selon la revendication 3, **caractérisé en ce que** les moyens de positionnement sont formés par au moins deux saillies de positionnement pour l'engagement dans des ouvertures de positionnement correspondantes (22), de préférence l'une des saillies de positionnement pouvant être introduite en vue d'un alignement exact avec un faible jeu dans l'ouverture de positionnement associée (22) et les moyens de connexion (20) étant disposés dans une région de surface du support modulaire (6) se trouvant à proximité spatiale de cette saillie de positionnement.

5. Module de porte selon l'une quelconque des revendications 2 à 4, **caractérisé en ce qu'**une commande interne de serrure de porte (14) est fixée sur le support modulaire (6) - notamment pour garantir la séparation étanche de l'espace humide (10) et de l'espace sec (12), laquelle peut être connectée par le biais de moyens de connexion (20) - formant une interface mécanique - à une serrure de porte (18) fixée sur la construction brute de porte (2).

6. Module de porte selon la revendication 5, **caractérisé en ce que** les moyens de connexion (20) sont formés entre la commande interne (14) et une première extrémité (24a) d'un élément de transfert (24) devant être disposé sur la construction brute de porte (2) et agissant avec une deuxième extrémité (24b) sur la serrure de porte (18), notamment un câble Bowden ou similaire.

7. Module de porte selon la revendication 5, **caractérisé en ce que** la commande interne (14) est connectée à une première extrémité (24a) d'un élément de transfert (24) disposé du côté de l'espace humide (10) sur le support modulaire (6), notamment réalisé en tant que câble Bowden ou similaire, les moyens de connexion (20) étant formés entre une deuxième extrémité (24b) de l'élément de transfert (24) et la serrure de porte (18).

8. Module de porte selon la revendication 6 ou 7, **caractérisé en ce que** l'extrémité (24a/24b) du côté de l'interface de l'élément de transfert (24) est fixée sur une partie de guidage (50) flottante et de ce fait montée, à l'aide de moyens d'alignement, de manière à pouvoir s'aligner automatiquement lors du montage du support modulaire (6).

9. Module de porte selon la revendication 8, **caractérisé en ce que** la partie de guidage (74) est préfixée de manière à s'encliqueter sur son côté d'espace humide avant un premier montage du support modulaire (6) et est automatiquement transférée à une fixation (78) du côté de la construction brute de porte lors du montage.

10. Module de porte selon l'une quelconque des revendications 5 à 9, **caractérisé en ce qu'**un assemblage des moyens de connexion mécaniques (20) peut s'effectuer lors du montage du support modulaire (6) dans une position de base d'actionnement (S1) de la commande interne (14).

11. Module de porte selon l'une quelconque des revendications 5 à 9, **caractérisé en ce qu'**un assemblage des moyens de connexion mécaniques (20) peut s'effectuer lors du montage du support modulaire (6) dans une position de montage spéciale (S0) de la commande interne (14), la commande interne (14) pouvant être transférée après l'assemblage ou en vue de l'assemblage dans sa position de base d'actionnement (S1).

12. Module de porte selon l'une quelconque des revendications 2 à 11, **caractérisé en ce qu'**une commande de verrouillage de serrure de porte (84) est fixée sur le support modulaire (6) - notamment en garantissant la séparation étanche entre l'espace humide (10) et l'espace sec (12) -, laquelle peut être connectée à la/une serrure de porte (18) fixée sur la construction brute de porte (2) par le biais de moyens de connexion (20) formant une interface mécanique.

13. Module de porte selon l'une quelconque des revendications 2 à 12, **caractérisé en ce qu'**au moins des moyens de contact enfichables (34) formant au moins une interface électrique sont fixés sur le support modulaire (6) - notamment en garantissant la séparation étanche entre l'espace humide (10) et l'espace sec (12) -.

14. Module de porte selon la revendication 13, **caractérisé en ce que** les moyens de connexion électrique (20) se composent des moyens de contact enfichables (34) fixés sur le support modulaire (6) et de moyens d'enfichage conjugués (36) correspondants devant être disposés sur le côté de la construction brute de porte (2).

15. Module de porte selon la revendication 14, **caractérisé en ce que** les moyens d'enfichage conjugués (36) font partie intégrante d'une serrure de porte (18).

16. Module de porte selon la revendication 14 ou 15, **caractérisé en ce que** les moyens de contact enfichables (34) font partie d'un appareil de commande de porte électrique (17).

17. Porte de véhicule (1) se composant d'une construction brute de porte (2) notamment en tôle métallique, de composants de porte (18, 36) fixés sur la construction brute de porte (2) ainsi que d'un module de porte (4) connecté à la construction brute de porte (2), portant des composants fonctionnels prémontés (14, 15, 16, 17), **caractérisée en ce que** les composants fonctionnels mécaniques sont assemblés aux composants de la porte par le biais de moyens de connexion (20) auto-guidants, disposés au moins partiellement sur le module de porte, dans une direction de montage du module de porte (4) qui correspond notamment approximativement à un axe transversal (Y) d'un système de coordonnées de véhicule usuel (X, Y, Z).

18. Porte de véhicule selon la revendication 17, **caractérisée par** une configuration du module de porte (4) selon l'une quelconque des revendications 1 à 16.

19. Procédé pour le montage d'une porte de véhicule (1), dans lequel des composants fonctionnels déterminés de la porte de véhicule (1) sont prémontés sur un module de porte (4) et le module de porte prémonté (4) est alors connecté à une construction brute de porte (2) en établissant des connexions entre les composants fonctionnels du côté du module de porte et les composants de la porte disposés du côté de la construction brute de porte, **caractérisé en ce que** le module de porte (4) est monté contre la construction brute de porte (2) dans une direction de montage correspondant notamment à un axe transversal du véhicule (Y) par assemblage par enfichage auto-guidant de moyens de connexion mécaniques (20) disposés au moins partiellement sur le module de porte.

20. Procédé selon la revendication 19, **caractérisé en ce que** les moyens de connexion (20) disposés entre une commande interne de serrure (14) du côté du module et une serrure de porte (18) sont assemblés dans une position de base d'actionnement (S1) de la commande interne (14), des moyens de fixation, qui fixent la commande interne (14) de manière prête au montage dans la position de base (S1), étant desserrés de préférence après le montage, par un premier mouvement d'actionnement dans une position d'ouverture (S2), notamment par destruction d'une connexion au niveaux de points destinés à la rupture (64).

21. Procédé selon la revendication 19, **caractérisé en ce que** les moyens de connexion (20) disposés entre une commande interne de serrure (14) du côté du module et une serrure de porte (18) sont assemblés dans une position de montage spéciale (S0) de la commande interne (14), la commande interne (14) étant transférée après le montage - notamment de manière irréversible - de la position de montage (S0) dans une position de base d'actionnement (S1).

22. Procédé selon l'une quelconque des revendications 19 à 21, **caractérisé en ce que** le module de porte (4) est fixé après un mouvement d'assemblage complet dans la direction de montage (Y) sur la construction brute de porte (2) notamment au moyen d'éléments de fixation à vis marginaux.
